# EUROPÄISCHE PATENTANMELDUNG

(11) **EP 0 896 804 A2**
(43) Veröffentlichungstag der Anmeldung: **17.02.1999**
(21) Anmeldenummer: 98112869.7
(22) Anmeldetag: 10.07.1998
(51) Int. Cl.: A47C 3/00

(54) **Dreiteilige Zapfenverbindung für Holzgestelle**

(30) Priorität: 14.08.1997 DE 19735353
(71) Anmelder: Drabsch, Karl Stefan, 92714 Pleystein (DE)
(72) Erfinder: Drabsch, Karl Stefan, 92714 Pleystein (DE)
(74) Vertreter: Kohlmann, Karl Friedrich, Dipl.-Ing.

(57) **Zusammenfassung**

Um eine Zapfenverbindung für zumindest drei Teile einer Holzkonstruktion zu schaffen, deren Stabilität derart hoch ist, daß sie auch bei höchst beanspruchten Gestellkonstruktionen einsetzbar, in serienmäßige Fertigung automatisiert einfach herstellbar und von geringen Materialkosten ist, wird eine Zapfenkonstruktion bereitgestellt, mit mehreren Zapfen 14 an einem ersten Teil (10), in gleicher Anzahl und Anordnung vorgesehenen runden Bohrungen (22) in einem zweiten Teil (20), in welche die Zapfen des ersten Teils eingepreßt und eingeleimt sind, mehreren Zapfen (32) am dritten Teil (30), wobei die Länge der Diagonalen des Querschnitts der Zapfen (14) des ersten Teils größer ist als der Durchmesser der runden Bohrungen (22), und zumindest einige der ersten Aussparungen (12) zur Aufnahme der Zapfen (32) des dritten Teils tiefer sind als die verbleibenden Aussparungen (11, 13) am ersten Teil.

## Beschreibung

### TECHNISCHES GEBIET

Die Erfindung betrifft eine Zapfenkonstruktion zum Verbinden von Holzgestellen. Unter Holzgestellen werden Gestelle aus Massivholz oder mehrlagigem Faserwerkstoff, wie z.B. Sperrholz oder Tischlerplatten verstanden. Im einzelnen sind Konstruktionen wie Tische, Stühle, insbesondere, wenn sie stapelbar sind, und allgemein Korpuselemente betroffen.

### STAND DER TECHNIK

Gattungsgemäße Zapfenkonstruktionen von Holzgestellen können sowohl Zug- als auch Hebelkräfte aufnehmen. Dem jeweiligen Verwendungszweck entsprechend, aus ästhetischen und finanziellen Gründen, sind die verwendeten Holzprofile im allgemeinen so gering wie möglich dimensioniert. Eine wirtschaftliche Nutzung des Holzes und eine möglichst einfache Herstellbarkeit der Zapfenverbindung muß berücksichtigt werden.

Es ist in diesem technischen Gebiet deshalb schwierig, unter Berücksichtigung des engen zur Verfügung stehenden Raumes eine Zapfenverbindungen vorzusehen, durch die die einzelnen Teile der Verbindung ausreichend stabil verbunden werden. Die Festigkeit von Zapfenverbindungen ist abhängig vom Verhältnis der Zapfenstärke zur Zapfenlänge, vom Gesamtquerschnitt der für eine Verbindung vorgesehenen Zapfen, von der Zapfenform sowie von der durch die Zapfengröße und deren Oberfläche gegebenen Verleimmöglichkeit. Die Festigkeit der Zapfenverbindung hängt weiterhin von der Form und Größe der zugehörigen Öffnungen ab, in die die Zapfen eingeführt sind. Ein möglichst großer einzelner Zapfen wird unabhängig von seiner Form zwangsläufig ein ungünstigeres Verhältnis zwischen Stärke und Länge aufweisen als aus dem gleichen Profil hergestellte Mehrfachzapfen gleicher Zapfenlänge, welche in einer entsprechenden Anzahl von korrespondierenden Zapfenöffnungen eingreifen. Geringere für die Verleimung zur Verfügung stehende Oberflächen und eine größere Schwächung des Holzprofils im Bereich der einzelnen Zapfenöffungen sind weitere Nachteile einer Zapfenverbindung mittels Einzelzapfen.

Vergleichbare Mehrfachzapfen haben allerdings zunächst einen geringeren Gesamtquerschnitt als ein möglichst großer Einzelzapfen, da die Mehrfachzapfen ja durch Teilung des Einfachzapfens entstehen. Dennoch kann mit Mehrfachzapfen eine größere Festigkeit der Zapfenverbindung erreicht werden, da eine wesentlich wirkungsvollere Durchdringung der beiden zu verbindenden Holzprofile stattfindet. Hieraus ergibt sich ein günstigeres Verhältnis zwischen Stärke und Länge der Mehrfachzapfen und überdies eine größere Gesamtoberfläche der Verbindungszapfen. Zug- und Hebelkräfte werden dadurch besser aufgefangen. Das ferner bestehende Problem, daß beim Zusammenfügen und Verleimen einer Zapfenverbindung der aufgetragene Leim bei gut ineinanderpassenden Zapfen abgestreift wird, was zu mangelhafter Verleimung führt, kann zwar durch eine Prägung oder Riffelung der Zapfenoberfläche begegnet werden; derartige Oberflächengestaltungen sind aber technisch um so schwieriger herstellbar, je mehr Zapfen für eine einzige Zapfenverbindung verwendet werden. Überdies ist bei sehr enger, mehrreihiger und einteiliger Zapfenanordnung eine derartige Oberflächenstruktur maschinell gänzlich undurchführbar. Prägungen oder Riffelungen müssen jedenfalls immer in einem zusätzlichen Arbeitsgang hergestellt werden, was die Herstellungskosten eines fertigen Holzgestells erhöht.

Bei Zapfenverbindungen von mehr als zwei Teilen ergeben sich weitere Probleme. Allgemein werden bei z.B. drei zu verbindenden Teilen zwei dieser Teile mit Zapfen an der Stirnseite versehen und das übrige Teil mit Öffnungen, in die diese Zapfen einführbar sind. Es ergibt sich nun das Problem, daß das übrige Teil aufgrund der zunehmenden Aushöhlung durch die zahlreichen Öffnungen strukturell erheblich geschwächt wird. Diese strukturelle Schwächung wird zwar teilweise dadurch ausgeglichen, daß beim Zusammenfügen der Teile die Zapfen in die Öffnungen eingreifen und diese folglich ausfüllen. Eine zusätzliche Verstärkung wird durch die Verleimung zwischen den Zapfen und Zapfenöffnungen erreicht. Dennoch sind die zwischen den Zapfen verbleibenden Stege relativ schmal, so daß im Verlauf der mit den Öffnungen versehenen Teile Spannungsspitzen im Bereich des Knotens entstehen, der durch die Verbindung gebildet wird. Diese Spannungsspitzen gefährden die Holzverbindung insbesonders dann, wenn auf sie Hebelkräfte aufgebracht werden.

Ferner erfordert es bei automatischer Herstellung von Zapfenöffnungen einen erheblichen Mehraufwand, diese Öffnungen in zwei Seiten eines Teils anstelle bloß an einer Seite vorzusehen. Üblicherweise werden solche Öffnungen durch Bohren bzw. Mehrfachbohren in einem Arbeitsgang erzielt. Falls diese Mehrfachbohrungen jedoch an zwei Seiten eines Bauteils hergestellt werden müssen, ist es typischerweise entweder notwendig, das Bauteil umzuspannen, neu auszurichten und einen zweiten Bearbeitungsgang vorzunehmen, oder es ist aufgrund der strukturellen Schwächung sogar notwendig, die Bohrungen in der ersten Seite mit den dort einzusetzenden Zapfen zu verleimen, bevor die Bohrungen in die zweite Seite eingebracht werden können.

Aus der FR-A-905 238 ist eine Holzkonstruktion aus zwei miteinander verbundenen Teilen für die Herstellung von Fensterrahmen und vergleichbaren Gegenständen bekannt geworden. Das erste der beiden zu verbindenden Fensterrahmenteile besitzt stirnseitig angefräste Zapfen von quadratischem Querschnitt, welche in einer einzigen Reihe nebeneinander angeordnet sind. Das andere Teil des Fensterrahmens weist in gleicher Anzahl und Anordnung zylindrische Bohrungen auf, in welche die Zapfen einpreßbar sind. Die hohen Anforderungen an Stabilität und Dauerhaftigkeit, welche an eine gattungsgemäße Verbindung gestellt werden müssen, lassen sich mit einer nur einreihigen Anordnung von quadratischen Zapfen nur schwer erfüllen.

Aus der EP-B1-0 115 592 ist eine Zapfenverbindung für Holzgestelle bekannt, bei der die Zapfen und entsprechend die Öffnungen für die Zapfen in mehreren, zueinander parallelen Reihen nebeneinander angeordnet sind. Jede dieser Reihen weist mehrere Zapfen auf und die Öffnungen sind konisch oder zylindrisch angesenkt.

Letztere Zapfenverbindung ermöglicht es durch das Anordnen der Zapfen in mehreren zueinander parallelen Reihen, die Festigkeit einer Zapfenverbindung wesentlich zu erhöhen. Zusätzlich lassen sich die mehrreihig angeordneten Zapfen in einfacher Weise automatisiert herstellen. Wie bereits erwähnt, ist das Einbringen einer oder mehrerer zusätzlicher Reihen von korrespondierenden Öffnungen in ein Teil der Zapfenverbindung kein fertigungstechnisches Problem. Das aus der EP-B1-0 115 592 bekannte Konzept ist jedoch nicht ohne weiteres auf eine Zapfenverbindung von mehr als zwei Teilen übertragbar. Bei außen angesetzten Füßen von Möbelstücken beispielsweise, was die Stapelbarkeit der Möbelstücke gewährleistet, ist das vorgenannte Konzept nicht ohne weiteres anwendbar.

Im Hinblick auf den Stand der Technik ist es folglich eine Aufgabe der vorliegenden Erfindung, eine Zapfenverbindung für zumindest drei Teile zu schaffen, deren Stabilität derart hoch ist, daß sie auch bei hoch beanspruchten Gestellkonstruktionen einsetzbar ist. Für eine serienmäßige Fertigung soll die Zapfenverbindung für drei Teile automatisiert einfach herstellbar sein, die Materialkosten für die zu verwendenden Teile der Zapfenverbindung sollen so gering wie möglich gehalten werden und die Zapfenkonstruktion soll ein ästhetisches Erscheinungsbild aufweisen.

### DARSTELLUNG DER ERFINDUNG

Obige Aufgaben werden erfindungsgemäß durch eine Zapfenkonstruktion gelöst, die eine Merkmalskombination gemäß Anspruch 1 aufweist.

Die als ein Merkmal der erfindungsgemäßen Lösung erwähnten Aussparungen sollen als nutenähnliche Ausnehmungen verstanden werden, wobei die Nuten im Querschnitt eine U-Form aufweisen, falls sie im Mittelbereich des ersten Teils liegen und im Querschnitt eine L-Form aufweisen, falls sie am Randbereich des ersten Teils liegen. Nutenflanken sind dabei zwar vorzugsweise parallel zueinander und rechtwinklig zu einem geraden Nutengrund, diese Form kann aber je nach Festigkeits- und Fertigungsgesichtspunkten abgewandelt werden. Es ist ersichtlich, daß die Aussparungen nicht durch das gesamte jeweilige Teil verlaufen müssen, sondern auch in Art von 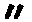 Sacklöchern" in den Teilen ausgebildet sein können.

Die erfindungsgemäße Lösung bietet die Vorteile, daß eine automatisierte Fertigung für sämtliche der die Zapfenkonstruktion bildenden Teile einfach durchgeführt werden kann, ohne daß die Festigkeit der Verbindung beeinträchtigt wird; gegenüber bekannten Zapfenverbindungen für drei Teile oder mehr ist eine serienmäßige Fertigung besser durchzuführen und die Ausführung der Zapfen ist stabiler als bei bisher bekannten Konstruktionen, wodurch außerdem Materialkosten durch geringe Holzbreiten eingespart werden können. Durch paßgenaue Aufnahme der Zapfen des dritten Teils in zumindest einigen der Aussparungen des ersten Teils, wobei dieses in die Zapfenöffnungen des zweiten Teils eingepaßt ist, wird nicht nur eine ästhetische Knotengestaltung erreicht, sondern auch die Festigkeit der Verbindung ist maximal. Ferner ist es in Verbindung damit, daß zumindest einige der ersten Aussparungen am ersten Teil tiefer sind als die verbleibenden, ermöglicht, die einzelnen Teile der neuartigen Zapfenkonstruktion mittels bestehender Fertigungseinrichtungen herzustellen. Es wird zur Umstellung der Fertigung auf die neuartige Konstruktion lediglich ein einfacher Werkzeugwechsel erforderlich. Die Knotengestaltung gemäß der Lösung der vorliegenden Erfindung ermöglicht es insbesondere, daß bei dem zweiten Teil eine Berücksichtigung der Faserrichtung des Holzes nicht notwendig ist. Es ist insbesondere aufgrund der erfindungsgemäßen Ausgestaltung der Zapfenkonstruktion möglich, eines oder mehrere der die Zapfenkonstruktion bildenden Teile nicht nur in Längsrichtung der Faser, sondern ebenfalls hiervon abweichend zu belasten.

Vorteilhafterweise sind die Zapfen des dritten Teils von rechteckigem Querschnitt, wodurch die Herstellung dieses Teils weiter erleichtert wird. Entsprechend ausgestaltet sind dann die Aussparungen des ersten Teils, in die diese Zapfen eingreifen. Auch durch diese vorteilhafte Weiterbildung wird die Fertigung erleichtert. Diese Ausgestaltung ist besonders vorteilhaft, falls als Werkzeug zur Herstellung der einzelnen Teile der Zapfenkonstruktion für das dritte Teil eines mit im wesentlichen rechteckigem Querschnitt verwendet wird.

Um die Fertigungskosten so gering wie möglich zu halten und um Fertigung und Montage so effizient wie möglich zu gestalten, werden gemäß einer weiteren Ausgestaltung der erfindungsgemäßen Zapfenkonstruktion alle Zapfen durch Fräsen ausgebildet. Durch Fräsen in einer Richtung parallel zur Stirnseite der Teile, an denen die Zapfen ausgebildet werden sollen, können Fingerzinken in einem Arbeitsgang hergestellt werden. Durch Verwendung von Mehrfachwerkzeugen lassen sich mehrere nebeneinander liegende Nuten einfach herstellen. Weiterhin lassen sich durch Mehrfachwerkzeuge, bei denen die einzelnen Schneidwerkzeuge unterschiedliche Eindringtiefen in das zu bearbeitende Material aufweisen, ebenfalls die Zapfen des ersten Teils derart ausarbeiten, daß zumindest einige der ersten Aussparungen in einem Arbeitsgang tiefer ausbildbar sind als die verbleibenden Aussparungen am ersten Teil. Unter Fräsen werden hier Arbeitsgänge verstanden, bei denen Scheiben-, Stift-, Stirnseitenfräser, Kreis- oder herkömmliche Sägeblätter, Stoß- oder Hobelwerkzeuge zum Einsatz kommen. Fräsen ist demzufolge ein generischer Ausdruck für derartige Herstellungsverfahren.

Besonders vorteilhaft ist die erfindungsgemäße Zapfenkonstruktion dahingehend weitergebildet, daß die Bohrungen des zweiten Teils konisch oder zylindrisch angesenkt sind. Eine derartige Ansenkung ermöglicht einerseits ein leichteres Einführen der Zapfen des ersten Teils, andererseits gleicht die Ansenkung Anordnungsfehler von Zapfen und Bohrungen aus, die durch Fertigungstoleranzen entstehen könnten, und ferner bewirken die Ansenkungen eine Initialfestigkeit, die beim Einführen von Zapfen mit Übermaß verhindert, daß Teile der Zapfen oder gar ganze Zapfen aus- oder abbrechen.

Um das Einführen weiter zu erleichtern und um eine Schwächung des zweiten Teils aufgrund der Bohrungen zu minimieren, ohne daß die Festigkeit der Zapfenkonstruktion nachteilig beeinflußt wird, sind die Zapfen des ersten Teils und die Bohrungen derart weitergebildet, daß sie jeweils einander entsprechend konisch geformt sind.

In gleicher Art ist es zusätzlich vorgesehen, daß die tieferen Aussparungen des ersten Teils und die Zapfen des dritten Teils jeweils einander entsprechend konisch geformt sind. Hierdurch ist es möglich, zusätzlich zum Kraftschluß durch Passung und Verleimung zwischen erstem und drittem Teil einen Formschluß dieser beiden Teile vorzusehen, der für eine Zugentlastung in der Richtung sorgen kann, gegen die der Konus läuft. Diese Verbesserung ist möglich, ohne daß die Fertigung bzw. Montage der Zapfenkonstruktion erheblich erschwert wird.

Gemäß einer weiteren vorteilhaften Weiterbildung der erfindungsgemäßen Zapfenkonstruktion sind die tiefer ausgebildeten ersten Aussparungen im Mittelbereich des ersten Teils ausgebildet. Dies besagt, daß die Aussparungen nutenähnlich mit zwei Flanken und einem Grund sind, im Gegensatz zu Aussparungen, die im Randbereich verlaufen und bei denen unter Umständen eine Flanke fehlt. Als Vorteil dieser Weiterbildung ergibt sich, daß die Zapfen des dritten Teils bis auf die Stirnseite gesamtumfänglich eingefaßt sind, falls die im ersten Teil ausgebildeten Aussparungen vollkommen durch das gesamte erste Teil verlaufen, nämlich an drei Seiten vom ersten Teil und an einer Seite vom zweiten Teil. Bei Aussparungen im ersten Teil in Form von 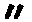 Sacklöchern" wären die Zapfen sogar gesamtumfänglich eingefaßt, was zu einer weiteren Verbesserung des Erscheinungsbildes führt.

Um zu ermöglichen, daß weitere Bauteile auf das gefügte erste und dritte Teil plan aufgelegt werden können, sind vorteilhafterweise die Zapfen des ersten und dritten Teils derart angeordnet, daß bei gefügtem erstem und drittem Teil die Oberkanten dieser beiden Teile zueinander bündig sind. Die Bezeichnung Oberkante orientiert sich an der als Ausführungsbeispiel im folgenden dargestellten Zapfenkonstruktion für einen Stuhl, bei dem das weitere Element z.B. eine aufgelegte Sitzfläche ist. Die Begriffswahl ist jedoch beispielhaft. In anderen Fällen kann sich die Bündigkeit dieser beiden Teile zueinander durchaus auf in Einbaulage Unterkanten oder Zwischenlagen für Unterteilungen beziehen.

Alternativ kann es vorteilhaft sein, die Zapfen des ersten und dritten Teils derart anzuordnen, daß bei gefügtem ersten und dritten Teil die Oberkanten dieser beiden Teile zueinander versetzt sind. Auch hier ist die Begriffswahl 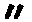 Oberkanten" wie vorstehend zu deuten. Die Anordnung der Zapfen derart, daß die Oberkanten von erstem und drittem Teil in gefügtem Zustand zueinander versetzt sind, ermöglicht es, weitere Bauelemente einzupassen. Dies kann für das Erscheinungsbild der Zapfenkonstruktion dann wünschenswert sein, wenn Stoß- bzw. Nahtstellen an bestimmten Seiten der Konstruktion nicht sichtbar sein sollen.

In ähnlicher Weise wie oben erwähnt, sind nach einer weiteren bevorzugten Ausführung die Zapfen des dritten Teils derart angeordnet, daß bei gefügtem erstem, zweitem und drittem Teil das zweite und dritte Teil an einer Seite zueinander bündig angeordnet sind. Alternativ sind die Zapfen des dritten Teils derart angeordnet, daß bei gefügtem ersten, zweiten und dritten Teil das zweite und dritte Teil zueinander versetzt angeordnet sind. Die Bündigkeit von zweitem und drittem Teil bei dieser Ausführungsform gewährleistet, daß die erfindungsgemäße Zapfenkonstruktion derart ausgeformt sein kann, daß rings um den durch die Konstruktion gebildeten Knoten keinerlei Stufenabsätze an den Nahtstellen entstehen, was bei heutigen Ansprüchen z.B. an das Erscheinungsbild von Möbelstücken erwünscht sein kann. Die versetzte Anordnung ermöglicht es z.B., mit der erfindungsgemäßen Zapfenkonstruktion hergestellte Möbelstücke platzsparend ineinander zu stapeln. Weiterhin verringert sie die Anzahl der Bearbeitungsgänge für das dritte Teil, da die Zapfen lediglich durch Aussparungen in einer Richtung erzeugt werden brauchen. Es ist nicht nötig, in dem dritten Teil einen weiteren Stufenabsatz auszuarbeiten.

Zwei parallele Reihen von Zapfen am ersten Teil lassen sich in einfacher Weise durch oben genannte Bearbeitungsverfahren herstellen und gewährleisten, daß sich die Festigkeit der erfindungsgemäßen Zapfenkonstruktion erheblich verbessert. Die insgesamt wirksame Querschnittsfläche der Zapfen, die letztendlich für die Festigkeit maßgebend ist, ist bei dieser vorteilhaften Weiterbildung verbessert.

### KURZE BESCHREIBUNG DER ZEICHNUNGEN

Ein Ausführungsbeispiel der Erfindung wird nachfolgend anhand der beigefügten Zeichnungen näher erläutert und beschrieben, in denen:
- Fig. 1: einen Stuhl als Ausführungsbeispiel einer erfindungsgemäßen Zapfenkonstruktion in perspektivischer Ansicht,
- Fig. 2: eine der Fig. 1 entsprechende Ansicht, wobei aber Lehne und Sitzfläche weggelassen sind,
- Fig. 3: die erfindungsgemäße Zapfenkonstruktion in einer explosionsartigen Ansicht,
- Fig. 4: zwei der drei Teile der Zapfenkonstruktion in einer explosionsartigen Ansicht, und
- Fig. 5: eine Schnittansicht zeigt, die der Linie V-V der Fig. 1 entspricht und die Zapfenkonstruktion in gefügtem Zustand im Teilschnitt darstellt.

### BESCHREIBUNG BEVORZUGTER AUSFÜHRUNGSFORMEN

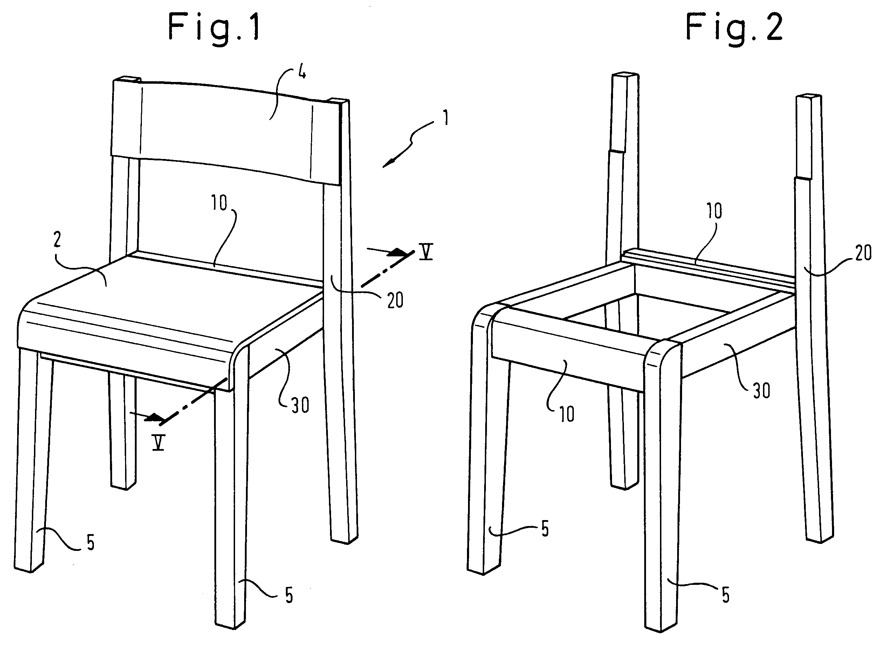

Fig. 1 zeigt einen Stuhl 1 als Anwendungsbeispiel für eine Zapfenkonstruktion. Der Stuhl weist Vorderbeine 5 und Hinterbeine auf. Die Hinterbeine stellen gleichzeitig das zweite Teil 20 der Zapfenkonstruktion dar. Ferner weist der Stuhl eine Sitzfläche 2 und eine Rückenlehne 4 auf. Ein Ausführungsbeispiel der Zapfenkonstruktion wird anhand des Knotens erläutert, wo erstes Teil 10, zweites Teil 20 und drittes Teil 30 der Zapfenkonstruktion zusammengefügt sind.

Fig. 2 zeigt eine Ansicht, die der der Fig. 1 entspricht. In Fig. 2 sind allerdings zur Verdeutlichung der Tragekonstruktion des in Fig. 1 mit 1 bezeichneten Stuhls Sitzfläche und Rückenlehne nicht dargestellt. Es sei darauf hingewiesen, daß auch der Knoten zwischen erstem Teil 10, Vorderbein 5 und drittem Teil 30 idealerweise so ausgeführt ist, wie der zwischen erstem Teil 10, zweitem Teil 20 und drittem Teil 30.

Aus dem in den Fig. 1 und 2 dargestellten Ausführungsbeispiel wird auch deutlich, aus welchen ästhetischen Gesichtspunkten die Zapfenkonstruktion ausgeführt sein kann, so daß die Oberkante des ersten Teils 10 bündig, oder wie in den Figuren dargestellt, versetzt zur Oberkante des Teils 30 liegt. Im dargestellten Fall ruht in Fig. 1 die Sitzfläche 2 auf den Vorderbeinen 5 und den dritten Teilen 30, ist jedoch derart in das erste Teil 10 eingepaßt, daß die obere Fläche der Sitzfläche 2 bündig mit der oberen Fläche des ersten Teils 10 abschließt.

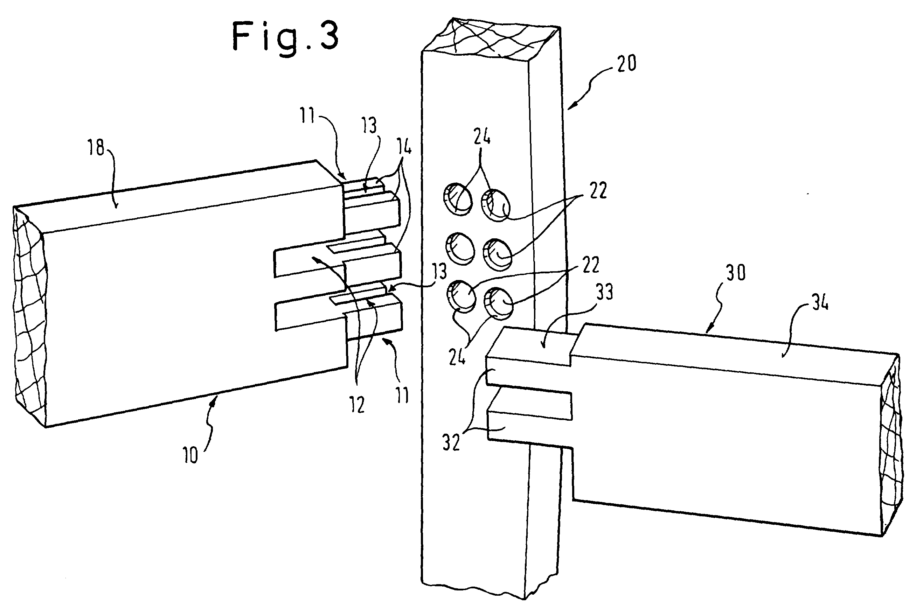

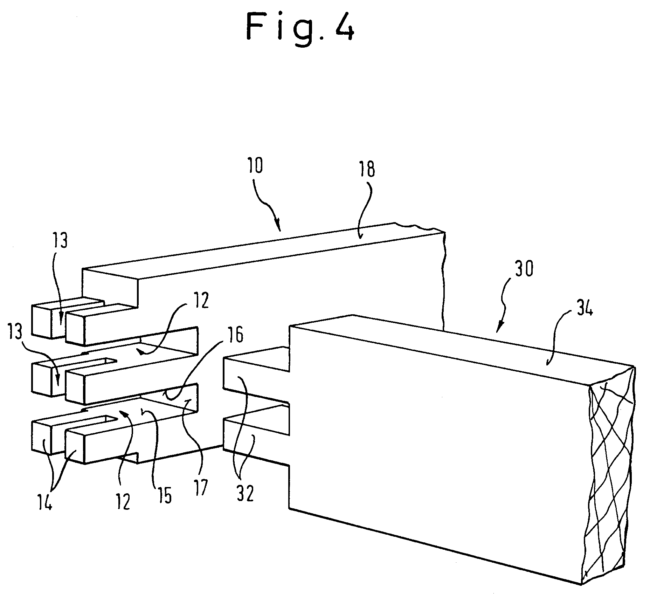

Fig. 3 zeigt Einzelheiten der Zapfenkonstruktion, die in gefügtem Zustand nicht sichtbar sind. So ist das erste Teil 10 mit Zapfen 14 versehen. Diese Zapfen sind gebildet, indem, vorzugsweise durch Fräsen, erste Aussparungen 11, 12, und zweite Aussparungen 13 im Endbereich des ersten Teils 10 ausgebildet sind. Die ersten Aussparungen 11, 12 verlaufen dabei rechtwinklig zu den zweiten Aussparungen 13. Einige der ersten Aussparungen sind tiefer ausgebildet als die verbleibenden. Diese tiefer ausgebildeten ersten Aussparungen 12 sind in dem dargestellten Ausführungsbeispiel derart angeordnet, daß sie Nuten mit zwei Flanken und einem Nutengrund bilden, wobei letztere Details besser aus der Fig. 4 hervorgehen. Die flacher verlaufenden ersten Aussparungen 11 sind derart am Rand des ersten Teils 10 angeordnet, daß sie nur eine Flanke und einen Grund aufweisen. Durch die identische Beabstandung der zueinander gleich beabstandeten ersten Aussparungen 11, 12 zu den ebenfalls zueinander gleich beabstandeten zweiten Aussparungen 13 weisen die Zapfen 14 des ersten Teils 10 einen annähernd quadratischen Querschnitt auf. Dies ist deswegen bevorzugt, da sie in runde Bohrungen 22, vorzugsweise Sacklöcher, des zweiten Teils 20 eingepaßt werden sollen. Die runden Bohrungen 22 können hierzu mit Ansenkungen 24 versehen sein, die als Einführhilfe dienen.

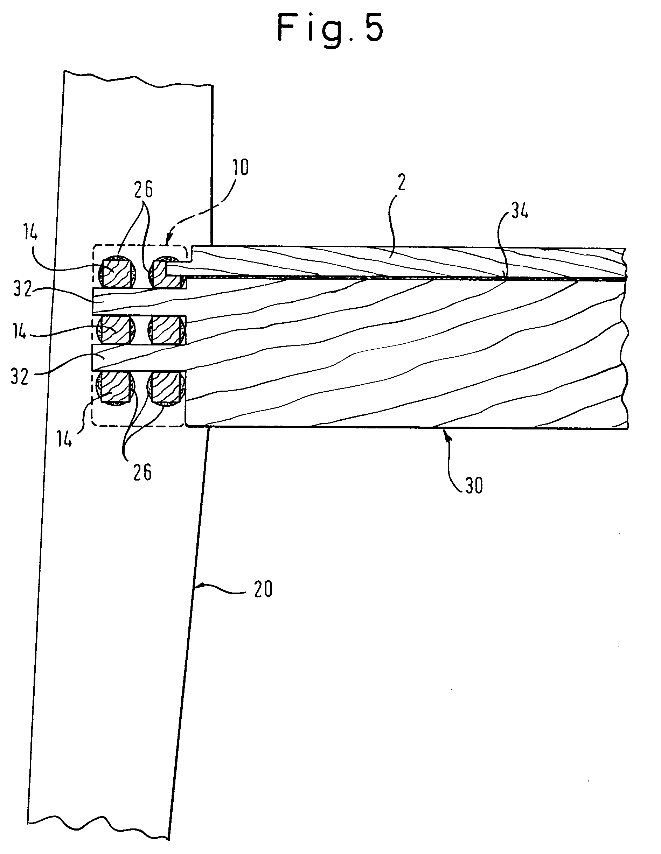

In ähnlicher Weise und zum gleichen Zweck können die Zapfen 14 des ersten Teils 10 angefast sein, was in den Zeichnungen allerdings nicht dargestellt ist. Zusätzlich sind die Zapfen 14 des ersten Teils relativ zu den Bohrungen 22 des zweiten Teils mit Übermaß bemessen, so daß die Diagonale des quadratischen Querschnitts der Zapfen 14 des ersten Teils 10 geringfügig größer ist als der Durchmesser der runden Bohrungen 22 des zweiten Teils 20. Holz als nachgiebiges Material wird sich beim Fügen von erstem Teil 10 und zweitem Teil 20 verformen und eine feste Verbindung ist gewährleistet. Zusätzlich ergeben sich an den Seitenflächen der Zapfen 14 Leimtaschen (26 in Fig. 5) zwischen Zapfenwandung und Bohrungswandung. Der Fügevorgang inklusive Verleimung wird weiter unten erläutert werden. Idealerweise sind die Zapfen 14 des ersten Teils relativ zu den Bohrungen 22 des zweiten Teils flächengleich. In einer bevorzugten Ausführungsform sind die Zapfen 14 in 8x8 mm, und die Bohrungen 22 des zweiten Teils in einem Durchmesser von 9,5 mm ausgebildet. Die Bohrungen weisen folglich eine Querschnittsfläche von ca. 70 mm² und die Zapfen eine Querschnittsfläche von 64 mm² auf, so daß die Flächengleichheit im wesentlichen erzielt ist.

Entsprechend der Ausrichtung und der Anordnung der Zapfen 14 des ersten Teils relativ zu den Bohrungen 22 des zweiten Teils entsteht bei der Verbindung ein Druck in Diagonalrichtung der Zapfen. Die Zapfen werden komprimiert, die Bohrungen gedehnt. Es entsteht folglich kein seitlicher Druck, so daß die Verbindungen zwischen den benachbarten Teilen in dieser Richtung von den Leimtaschen bewirkt wird. Durch den Druck in Diagonalrichtung des Formschlusses tritt selbst bei Verwendung der erfindungsgemäßen Lösung im Endbereich von Holzteilen (beispielsweise bei Füßen von Möbelstücken) kein Spalten des Holzes auf, und die Feuchtigkeit des Holzes muß nicht mehr als wesentlicher Faktor bei der Zapfenkonstruktion berücksichtigt werden, so daß beliebige Holzkombinationen verwendet werden können.

Ebenfalls in der Fig. 3 ist das dritte Teil 30 dargestellt. Am dritten Teil sind Zapfen 32 vorgesehen, die bei dem dargestellten Ausführungsbeispiel durch Fräsen in lediglich eine Richtung ausgebildet sind. Dies kann z.B. durch einen dreischneidigen Fräser geschehen. Bei einer solchen Werkzeugwahl ist zur Ausbildung der Zapfen 32 des dritten Teils 30 lediglich ein Bearbeitungsgang erforderlich. Die Abmessungen eines Zapfens 32 entsprechen denen der tieferen ersten Aussparungen 12 des ersten Teils 10. Die Zapfen 32 des dritten Teils 30 sind bemessen, daß sie derart in die tieferen Aussparungen 12 des ersten Teils 10 eingepaßt werden können, daß ihre eine Seite im Nutengrund der tieferen Aussparungen 12 anliegt und ihre andere Seite bündig zum Nutengrund der flacheren Aussparungen 11 des ersten Teils verläuft. Wie der Fachmann aus den Figuren entnehmen kann, läßt sich durch geeignete Wahl des Abstands zwischen Oberseite 33 des oberen Zapfens und Oberseite 34 des ersten Teils 30 in Relation zum Abstand zwischen der oberen der tiefer verlaufenden Nuten 12 des ersten Teils 10 und dessen Oberseite 18 einstellen, ob die Oberseiten 18, 34 von erstem Teil 10 und drittem Teil 30 zueinander bündig oder versetzt verlaufen. Gleichermaßen ist es denkbar, die Zapfen 32 des dritten Teils 30 durch zwei zueinander rechtwinklig verlaufende Fräsvorgänge herzustellen. Dies würde bewirken, daß, bei Wahl einer größeren Materialstärke für das dritte Teil 30, zusätzlich auch drittes Teil 30 und zweites Teil 20 auf ihrer Rückseite bündig verlaufen könnten. Diese Abwandlung von der dargestellten und bevorzugten Ausführungsform würde allerdings zu einer Beeinträchtigung der Stapelfähigkeit führen, denn, wie aus den Figuren hervorgeht, wird die Stapelfähigkeit bei dem dargestellten Stuhl dadurch erreicht, daß die zweiten Teile 20 (hinteren Beine) außerhalb der Sitzfläche liegen.

Aus Fig. 4 geht noch einmal deutlicher hervor, wie die Zapfen 14 des ersten Teils 10 derart herausgearbeitet werden, daß sie mit den Zapfen 32 des dritten Teils 30 zusammenpassen. Insbesondere geht aus der Fig. 4 hervor, daß die tiefer verlaufenden Aussparungen des ersten Teils erste Flanken 15, zweite Flanken 16 und einen Grund 17 aufweisen. Obgleich in der dargestellten, bevorzugten Ausführungsform Aussparungen mit annähernd U-förmigem bzw. rechteckigem Querschnitt dargestellt sind, ist es ebenfalls denkbar, diese Aussparungen mit anderen Formen zu versehen. Insbesondere ist dies der Fall, falls für das dritte Teil 30 Formhölzer, d.h. Hölzer mit nicht rechteckigem Querschnitt, verwendet werden.

Fig. 5, die eine Ansicht nach der Schnittlinie V-V der Fig. 1 zeigt, illustriert erstes Teil 10, zweites Teil 20 und drittes Teil 30 sowie Sitzfläche 2 in montiertem Zustand. Es ist der Figur entnehmbar, wie einerseits die Zapfen 32 des dritten Teils 30 derart bemessen sind, daß sie in die zwischen den Zapfen 14 des ersten Teils befindlichen Aussparungen passen. Andererseits läßt sich erkennen, wie sich zwischen den Zapfen 14 des ersten Teils und den runden Bohrungen des zweiten Teils Leimtaschen 26 ausbilden. Der aus diesen Taschen heraustretende Leimüberschuß dient in Verbindung mit auf dem Teil 30 zusätzlich aufgetragenem Leim dazu, das dritte Teil 30 mit erstem Teil 10 und zweitem Teil 20 zu verleimen.

Im folgenden wird ein bevorzugter Montage- bzw. Fügevorgang für die Teile 10, 20 und 30 beschrieben.

Zunächst wird in die runden Bohrungen 22 der zweiten Teile 20 bzw. Vorderbeine 5 Leim eingebracht. Weiterhin wird Leim auf die Zapfen 32 der dritten Teile 30 aufgetragen, die in einem darauffolgenden Arbeitsgang in die tieferen Aussparungen 12 des ersten Teils 10 unter Preßpassung eingeführt werden. Es ergibt sich ein rechteckiges Gestell für die Sitzfläche, mit an den Knoten hervorstehenden Zapfen 14 der ersten Teile 10.

Im weiteren werden ebenfalls unter Preßpassung je ein zweites Teil 20 und Vorderbein 5 seitenweise auf die herausstehenden Zapfen 14 der ersten Teile 10 gezwungen. Die zumindest zum Teil mit Leim gefüllten runden Sackbohrungen 22 im zweiten Teil 20 bzw. Vorderbein 5 werden nun bis auf die sich ergebenden, vorstehend erwähnten Leimtaschen 26 von den Zapfen 14 gefüllt. Der überschüssige Leim tritt aus den Öffnungen heraus und verstärkt nach Aushärten die Zapfenkonstruktion. Anschließend wird die Sitzfläche 2 in eine Nut des hinteren ersten Teils eingeführt und mit geeigneten Verbindungselementen auf den Oberkanten der Teile 30 und des vorderen ersten Teils 10 sowie der vorderen Beine 5 befestigt. Hier können Holzdübel, Schrauben, Nägel, Holzleim oder ähnliche, gleichwirkende Verbindungselemente vorgesehen sein. Mit gleichen Befestigungselementen wird dann die Lehne 4 an den zweiten Teilen 20 befestigt.

Oben beschriebene sowie weitere vorteilhafte Ausführungsformen der Erfindung ergeben sich aus den folgenden Ansprüchen.

## Patentansprüche

1. Zapfenkonstruktion zum Verbinden von zumindest drei Teilen von Holzgestellen, insbesondere Stollenkonstruktionen wie Tische, Stühle (1), Korpuselemente und sonstige Holzgestelle, mit
- mehreren Zapfen (14) am ersten Teil (10), die durch zueinander gleich beabstandete erste Aussparungen (11, 12) und durch zu den ersten Aussparungen weitgehend rechtwinklig verlaufende und identisch beabstandete weitere Aussparungen (13) gebildet sind,
- in gleicher Anzahl und Anordnung vorgesehenen runden Bohrungen (22) im zweiten Teil (20), in welche die Zapfen (14) des ersten Teils eingepreßt und eingeleimt sind,
- mehreren Zapfen (32) am dritten Teil (30), wobei
- die Länge der Diagonalen des Querschnitts der Zapfen (14) des ersten Teils größer ist als der Durchmesser der runden Bohrungen (22), und
- zumindest einige der ersten Aussparungen (12) zur Aufnahme der Zapfen (32) des dritten Teils tiefer sind als die verbleibenden Aussparungen (11, 13) am ersten Teil.

2. Zapfenkonstruktion nach Anspruch 1, dadurch gekennzeichnet, daß die Zapfen (32) des dritten Teils von rechteckigem Querschnitt sind.

3. Zapfenkonstruktion nach mindestens einem der vorhergehenden Ansprüche, dadurch gekennzeichnet, daß alle Zapfen (14, 32) durch Fräsen[(p7)1] ausgebildet sind.

4. Zapfenkonstruktion nach mindestens einem der vorhergehenden Ansprüche, dadurch gekennzeichnet, daß die Bohrungen konisch oder zylindrisch angesenkt (24) sind.

5. Zapfenkonstruktion nach mindestens einem der vorhergehenden Ansprüche, dadurch gekennzeichnet, daß die Zapfen (14) des ersten Teils und die Bohrungen (22) jeweils einander entsprechend konisch geformt sind.

6. Zapfenkonstruktion nach mindestens einem der vorhergehenden Ansprüche, dadurch gekennzeichnet, daß die tiefer ausgebildeten ersten Aussparungen (12) des ersten Teils und die Zapfen (32) des dritten Teils jeweils einander entsprechend konisch geformt sind.

7. Zapfenkonstruktion nach mindestens einem der vorhergehenden Ansprüche, dadurch gekennzeichnet, daß die tiefer ausgebildeten ersten Aussparungen (12) im Mittenbereich[(p7)2] des ersten Teils ausgebildet sind.

8. Zapfenkonstruktion nach mindestens einem der vorhergehenden Ansprüche, dadurch gekennzeichnet, daß die Zapfen des ersten und dritten Teils derart angeordnet sind, daß bei gefügtem ersten (10) und dritten (30) Teil die Oberkanten (18, 34)[(p7)3] dieser beiden Teile zueinander bündig sind.

9. Zapfenkonstruktion nach mindestens einem der Ansprüche 1 bis 7, dadurch gekennzeichnet, daß die Zapfen des ersten und dritten Teils derart angeordnet sind, daß bei gefügtem ersten (10) und dritten (30) Teil die Oberkanten (18, 34)[(p7)4] dieser beiden Teile zueinander versetzt sind.

10. Zapfenkonstruktion nach mindestens einem der vorhergehenden Ansprüche, dadurch gekennzeichnet, daß die Zapfen des dritten Teils derart angeordnet sind, daß bei gefügtem ersten, zweiten und dritten Teil das zweite (20) und dritte (30) Teil an einer Seite zueinander bündig angeordnet sind[(p7)5].

11. Zapfenkonstruktion nach mindestens einem der Ansprüche 1 bis 9, dadurch gekennzeichnet, daß die Zapfen des dritten Teils derart angeordnet sind, daß bei gefügtem ersten, zweiten und dritten Teil das zweite (20) und dritte (30) Teil zueinander versetzt angeordnet sind[(p7)6].

12. Zapfenkonstruktion nach mindestens einem der vorhergehenden Ansprüche, dadurch gekennzeichnet, daß am ersten Teil (10) zwei parallele Reihen von Zapfen (14) vorgesehen sind.
